# EUROPEAN PATENT APPLICATION

(11) **EP 4 631 793 A1**
(43) Date of publication of application: **15.10.2025**
(21) Application number: 25159713.4
(22) Date of filing: 24.02.2025
(51) Int. Cl.: B60R 11/00, B60R 13/02

(54) **COVER MEMBER ATTACHMENT STRUCTURE**

(30) Priority: 09.04.2024 JP 2024062682
(71) Applicant: TOYOTA JIDOSHA KABUSHIKI KAISHA, Toyota-shi, Aichi-ken, 471-8571 (JP)
(72) Inventor: NAGATA, Takatsugu, Toyota-shi, 471-8571 (JP)
(74) Representative: Kuhnen & Wacker Patent- und Rechtsanwaltsbüro PartG mbB

(57) **Abstract**

A cover member attachment structure (10) includes; a support member (20) that is fixed to a roof member (18) of a vehicle (12); a console member (40); and a cover member (30) that is disposed so as to be adjacent to the console member (40) in a vehicle front-rear direction, such that a first end portion (30A) of the cover member (30) in the vehicle front-rear direction is supported by a glass member (14) and a second end portion (30B) of the cover member (30) in the vehicle front-rear direction is attached to the support member (20), the cover member (30) housing a housed object between the cover member (30) and the glass member (14). **In** the attachment structure (10), an elastic member (16) is interposed between the second end portion (30B) of the cover member (30) and the support member (20).

## Description

### BACKGROUND OF THE INVENTION

### 1. Field of the Invention

The present disclosure relates to a cover member attachment structure.

### 2. Description of Related Art

Conventionally, an attachment portion structure for a vehicle exterior detection sensor has been proposed (see Japanese Unexamined Patent Application Publication No. 2022-155010). In the attachment portion structure, a front portion of a sensor cover is locked to a sensor bracket through a front-side locking portion, a rear portion of the sensor cover is locked to a console bracket of an overhead console through a rear-side locking portion, and the rear portion of the sensor cover is biased in a vehicle-width direction by a rear-side spring portion. The front-side locking portion restricts the displacement of the sensor cover in a vehicle-height direction, while allowing the displacement of the sensor cover in a vehicle front-rear direction and the vehicle-width direction and the pivot of the sensor cover around an axis along the vehicle-width direction. The rear-side locking portion restricts the displacement of the sensor cover in the vehicle-height direction and the vehicle front-rear direction, while allowing the displacement of the sensor cover in the vehicle-width direction.

### SUMMARY OF THE INVENTION

However, depending on the manner of the assembly between the sensor cover and the overhead console, a force in a vehicle downward direction is sometimes given to the rear portion side of the sensor cover by the action of gravitational force, while the front portion side of the sensor cover serves as a rotation fulcrum, as laterally viewed in the vehicle-width direction. Therefore, a design gap is sometimes generated between a rear end portion of the sensor cover and a front end portion of the overhead console.

The present disclosure provides a cover member attachment structure that can reduce the design gap that is generated between a cover member and a console member.

A cover member attachment structure in a first aspect according to the present disclosure includes: a support member that is fixed to a roof member of a vehicle; a console member that is fixed to the roof member; and a cover member that is disposed so as to be adjacent to the console member in a vehicle front-rear direction, such that a first end portion of the cover member in the vehicle front-rear direction is supported by a glass member that separates an interior and exterior of the vehicle and a second end portion of the cover member in the vehicle front-rear direction is attached to the support member, the cover member being configured to house a housed object between the cover member and the glass member, in which an elastic member is interposed between the second end portion of the cover member and the support member.

According to the disclosure in the first aspect, in the cover member that houses the housed object between the cover member and the glass member that separates the interior and exterior of the vehicle, the first end portion in the vehicle front-rear direction is supported by the glass member, and the second end portion in the vehicle front-rear direction is attached to the support member that is fixed to the roof member of the vehicle. Moreover, the cover member is disposed so as to be adjacent to the console member that is fixed to the roof member, in the vehicle front-rear direction.

The elastic member is interposed between the second end portion of the cover member and the support member. That is, the second end portion of the cover member is biased to the first end portion side with respect to the support member, by the elastic restoring force of the elastic member. Accordingly, even when the force in the vehicle downward direction is given to the second end portion side of the cover member by the action of gravitational force while the first end portion side of the cover member serves as a rotation fulcrum, as laterally viewed in the vehicle-width direction, the movement to the vehicle downward side is restrained, compared to a case where the elastic member is not interposed between the second end portion of the cover member and the support member. Thereby, the design gap that is generated between the cover member and the console member is reduced.

The second end portion of the cover member may include a fitting portion that is fitted in a hole portion that is provided on the support member.

Thereby, the second end portion of the cover member is accurately attached to the support member.

The fitting portion may be provided with a flange portion that faces the support member, and the elastic member may be interposed between the flange portion and the support member.

Thereby, the second end portion of the cover member is more effectively biased to the first end portion side with respect to the support member, by the elastic restoring force of the elastic member, and the movement to the vehicle downward side is more effectively restrained.

The elastic member may be composed of a resin material that is softer than the support member.

Thereby, the second end portion of the cover member is more effectively biased to the first end portion side with respect to the support member, compared to a case where the elastic member is composed of a resin material that is harder than the support member.

The elastic member may be a roof lining that constitutes a roof of a vehicle cabin.

Thereby, the number of components is decreased and the production cost is reduced, compared to a case where the elastic member is provided separately from the roof lining.

An end portion of the console member on the side of the cover member may be provided with an extension portion that overlaps with an end portion of the cover member.

The design gap that is generated between the cover member and the console member is hidden by the extension portion.

The first end portion of the cover member may be supported by the glass member through a cover support portion, and the cover support portion may be configured to allow movement of the cover member in the vehicle front-rear direction and a vehicle-width direction.

Thereby, when the cover member is assembled, it is possible to absorb the dimension tolerance of the cover member with respect to the cover support portion.

As described above, according to the present disclosure, it is possible to reduce the design gap that is generated between the cover member and the console member.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic perspective view showing a cover member attachment structure according to an embodiment;
FIG. 2 is a schematic plan view showing the cover member attachment structure according to the embodiment;
FIG. 3 is a schematic sectional side view showing the cover member attachment structure according to the embodiment;
FIG. 4 is a schematic sectional side view showing the cover member attachment structure according to the embodiment as an enlarged view;
FIG. 5 is a schematic perspective view showing the cover member attachment structure according to the embodiment as viewed from a vehicle cabin side; and
FIG. 6 is a schematic perspective view showing a cover member attachment structure according to a modification of the embodiment.

### DETAILED DESCRIPTION OF EMBODIMENTS

An embodiment according to the present disclosure will be described below in detail with reference to the drawings. For explanatory convenience, an arrow UP, which is shown in the figures as necessary, indicates a vehicle upward direction, an arrow FR indicates a vehicle forward direction, an arrow RH indicates a vehicle rightward direction, and an arrow LH indicates a vehicle leftward direction. Accordingly, in the following description, unless otherwise mentioned, upward and downward directions, forward and rearward directions, and rightward and leftward directions indicate upward and downward directions of a vehicle-height direction, forward and rearward directions of a vehicle front-rear direction, and rightward and leftward directions of a vehicle right-left direction (vehicle-width direction).

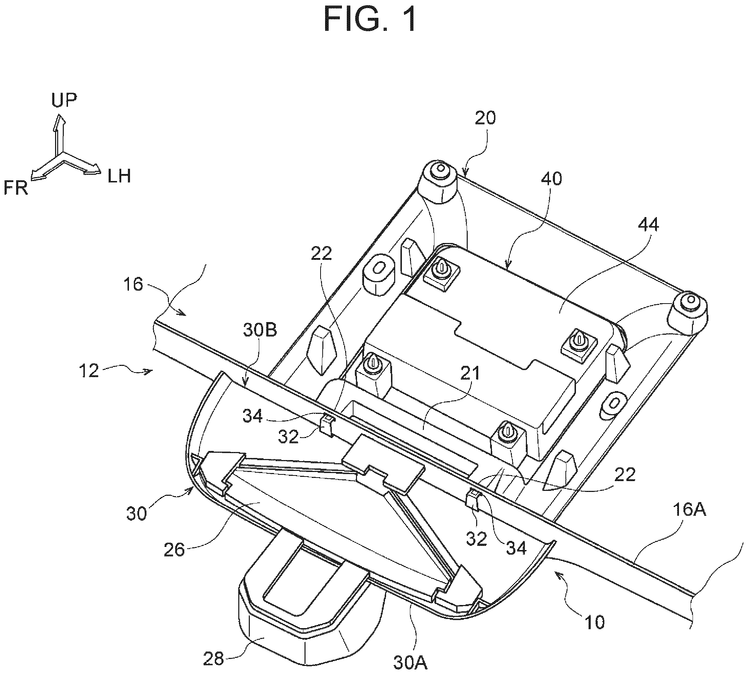

As shown in FIG. 1 to FIG. 3, in the embodiment, as an example, a front windshield glass 14 is adopted as a glass member that separates the interior and exterior of the vehicle. Accordingly, as example, a sensor cover 30 that covers a sensor unit (not illustrated) from the lower side is adopted as a cover member that constitutes an attachment structure 10 according to the embodiment. The sensor unit is an example of a housed object that is disposed at an upper end portion of the front windshield glass 14. Moreover, as an example, an overhead console 40 that is disposed on the rear side of the sensor cover 30 is adopted as a console member.

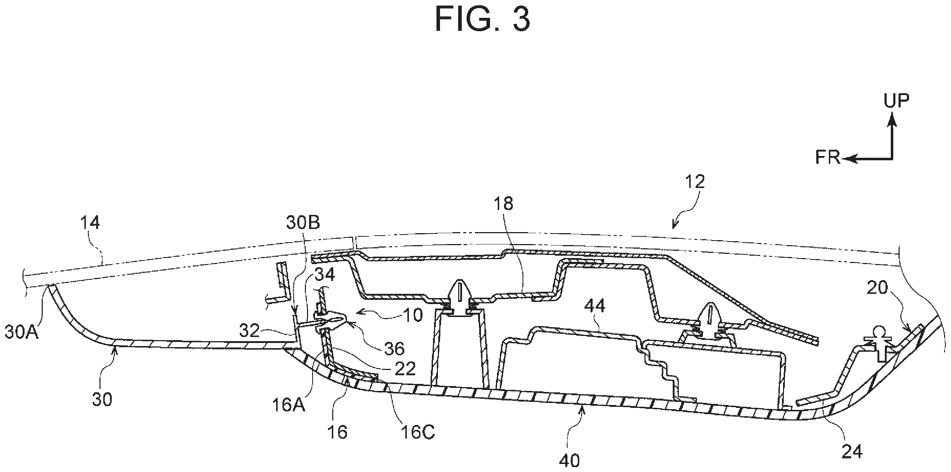

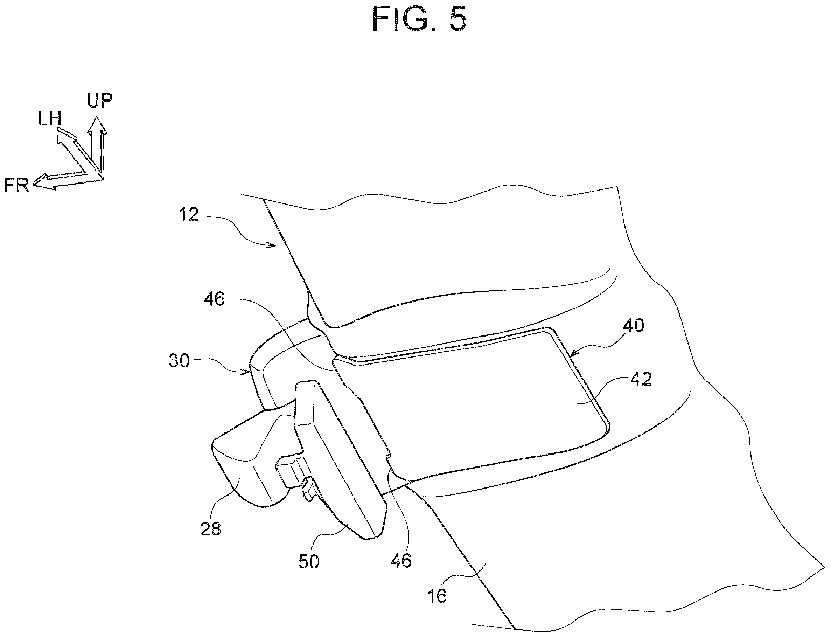

The overhead console 40 includes a console cover 42 (see FIG. 5) that is disposed on the vehicle cabin side. A case portion 44 in which a room light (not illustrated) and the like are built is provided on the upper surface side of the console cover 42. The case portion 44 is disposed at an opening portion 16C (see FIG. 3) that is formed on a later-described roof lining 16. An exposure portion (not illustrated) or the like, where a lens of the room light, a switch for turning the room light on or off, and the like are exposed is formed on the console cover 42.

As shown in FIG. 1 to FIG. 3, the roof lining 16 in which at least a front end portion 16A functions as an elastic member is provided on a roof of the vehicle 12 on the vehicle cabin side. On the upper side of the roof lining 16, a plurality of roof cross members 18 (see FIG. 3) as roof members that extend in the vehicle-width direction is provided at a predetermined front-rear-directional interval. That is, each roof cross member 18 bridges a pair of right and left roof side rails (not illustrated).

A roof bracket 20 as a support member is provided between the roof lining 16 and the roof cross members 18. The roof bracket 20 is formed in a roughly rectangular frame shape, and is attached and fixed to the roof cross members 18. The case portion 44 of the overhead console 40 is disposed on the inside of the roof bracket 20. The overhead console 40 (case portion 44) is also attached and fixed to the roof cross member 18 (see FIG. 3).

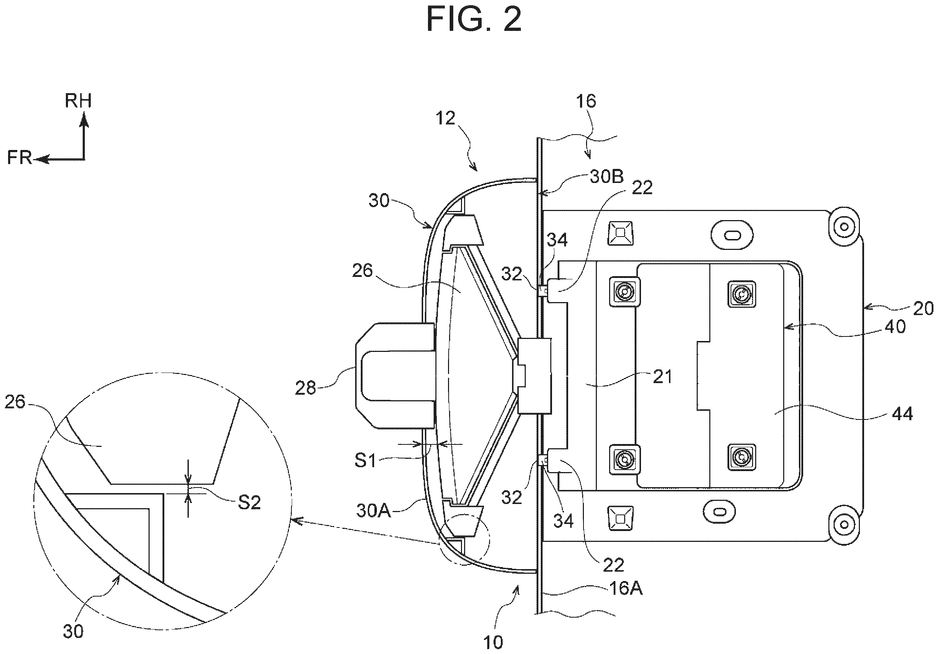

The sensor unit includes sensors for driving assist (for autonomous driving) that detects peripheral information (at least information about the position, direction and distance, and the like of an object that exists on the forward side) about the vehicle 12, and for example, includes a camera, an infrared laser sensor, and the like. The sensor unit is supported by a cover bracket 26 (see FIG. 1 and FIG. 2) that serves as a cover support portion and that is attached to an upper side on the inner surface of the front windshield glass 14 by an adhesive or the like.

The sensor cover 30 covers the sensor unit from the lower side, while a front end portion 30A side of the sensor cover 30 is attached to the cover bracket 26 and a rear end portion 30B side of the sensor cover 30 is attached to the roof bracket 20. In other words, the sensor unit is housed between the sensor cover 30 and the front windshield glass 14, while the front end portion 30A side of the sensor cover 30 is supported by the front windshield glass 14 through the cover bracket 26 and the rear end portion 30B side of the sensor cover 30 is supported by the roof bracket 20. In the present disclosure, the front end portion 30A is an example of the first end portion, and the rear end portion 30B is an example of the second end portion.

The cover bracket 26 is configured to allow the movement of the sensor cover 30 in the front-rear direction and the vehicle-width direction. Specifically, as shown in FIG. 2, the cover bracket 26 is formed such that the size of the cover bracket 26 is smaller than the size of the sensor cover 30, and predetermined clearances S1, S2 are provided in the front-rear direction and the vehicle-width direction, with respect to the sensor cover 30. Because of the clearances S1, S2, the sensor cover 30 is configured to be attachable even when the position of the sensor cover 30 slightly deviates from the position of the cover bracket 26.

Next, the attachment structure 10 of the rear end portion 30B of the sensor cover 30 to the roof bracket 20 will be described in detail. As shown in FIG. 1 to FIG. 4, at the rear end portion 30B of the sensor cover 30, a pair of right and left vertical wall portions 32 is integrally formed at a predetermined vehicle-width-directional interval. Each of the vertical wall portions 32 extends to the upper side, and has a predetermined length. At upper portions of the vertical wall portions 32, horizontal wall portions 34 are integrally formed. Each of the horizontal wall portions 34 extends to the rear side, and has a predetermined length.

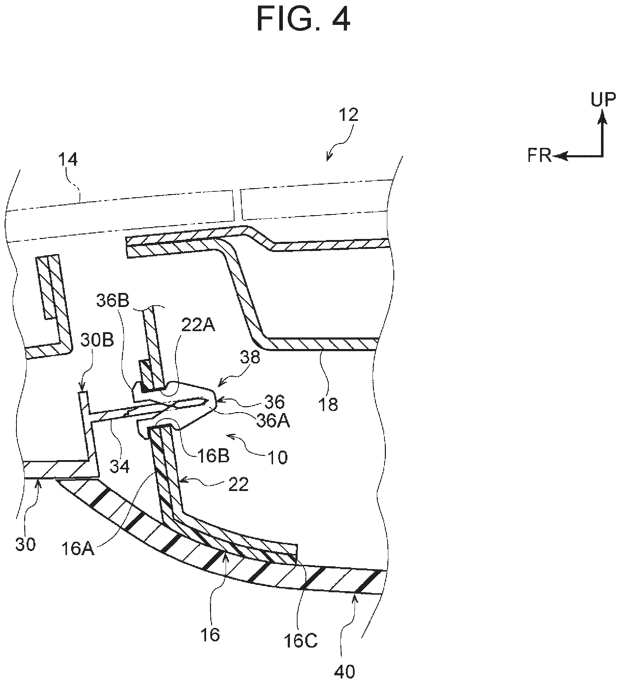

As shown in FIG. 3 and FIG. 4, to each horizontal wall portion 34, a clip member 36 can be fitted from the rear side. An end portion of the clip member 36 that is oriented to the rear side is a hinge portion 36A, and the front side of the clip member 36 can be opened and closed in the vehicle-height direction. Accordingly, each horizontal wall portion 34 can be sandwiched in the vehicle-height direction by the clip member 36. At an end portion of the clip member 36 that is oriented to the front side, flange portions 36B are integrally formed. The flange portions extend so as to be bent to the upper side and lower side roughly orthogonally, respectively.

As shown in FIG. 1 and FIG. 2, at a vehicle-width-directional central portion of a front portion of the roof bracket 20, a coupling portion 21 is integrally formed. The coupling portion 21 has a roughly "U" shape in planar view in which the front side is an opening side, and extends in the vehicle-width direction. At right and left front end portions of the coupling portion 21, attachment portions 22 are integrally formed, respectively. Each attachment portion 22 extends to the lower side, and has a flat plate shape. As shown in FIG. 4, at an upper portion of each attachment portion 22, a hole portion 22A is formed. The hole portion 22A is opened in the front-rear direction, and has a rectangular shape. The hinge portion 36A side of the clip member 36 is fitted (pressed) in the hole portion 22A from the front side.

That is, a fitting portion 38 that is fitted in the hole portion 22A of the attachment portion 22 is constituted by the horizontal wall portion 34 formed at the rear end portion 30B of the sensor cover 30 and the clip member 36 fitted in the horizontal wall portion 34. When the fitting portion 38 (the hinge portion 36A side of the clip member 36) is fitted in the hole portion 22A, rear surfaces of the flange portions 36B of the clip member 36 face a front surface of the attachment portion 22 in the front-rear direction.

In the attachment structure 10 according to the embodiment, the front end portion 16A of the roof lining 16 is configured to be interposed between the rear surfaces of the flange portions 36B of each clip member 36 and the front surface of the attachment portion 22. That is, the front end portion 16A of the roof lining 16 is bent so as to extend to the upper side, and a rectangular through-hole 16B that communicates with the hole portion 22A is formed also on the front end portion 16A. Accordingly, the fitting portion 38 (the hinge portion 36A side of the clip member 36) is fitted in the through-hole 16B of the roof lining 16 and the hole portion 22A, by being inserted from the front side.

Thereby, the rear end portion 30B of the sensor cover 30 is configured to be accurately attached to the attachment portion 22 of the roof bracket 20. The sensor cover 30 is configured to be disposed so as to be adjacent to the front side of the overhead console 40. The roof lining 16 is composed of a resin material (for example, urethane foam, or the like) that is softer than the roof bracket 20.

Further, as shown in FIG. 5, extension portions 46 are integrally formed at least on both right and left side of a front end portion (an end portion on the sensor cover 30 side) of the console cover 42 of the overhead console 40. Each of the extension portions 46 overlaps with a lower surface of the rear end portion 30B of the sensor cover 30, and has a roughly rectangular shape in bottom view.

On the lower side of the sensor cover 30, an electronic inner mirror 50 is disposed. The electronic inner mirror 50 is a display device that displays at least an image of the rear side of the vehicle 12. The electronic inner mirror 50 is supported by a mirror bracket 28 that is provided on the front windshield glass 14 on the front side of the sensor cover 30.

Next, the operation of the thus configured attachment structure 10 for the sensor cover 30 according to the embodiment will be described.

As described above, the sensor unit is housed between the sensor cover 30 and the front windshield glass 14. The front end portion 30A of the sensor cover 30 is supported by the front windshield glass 14 through the cover bracket 26. Further, the rear end portion 30B of the sensor cover 30 is attached to the attachment portion 22 of the roof bracket 20 that is fixed to the roof cross members 18 of the vehicle 12.

Specifically, the horizontal wall portions 34 are formed at the rear end portion 30B of the sensor cover 30. The hinge portion 36A side (fitting portion 38) of the clip member 36 provided at the horizontal wall portion 34 is pressed and fitted in the through-hole 18B formed on the front end portion 16A of the roof lining 16 and the hole portion 22A formed on the attachment portion 22. Moreover, the sensor cover 30 is disposed so as to be adjacent to the front side of the overhead console 40 fixed to the roof cross members 18.

The front end portion 16A of the roof lining 16 is interposed between the flange portions 36B of the clip member 36 and the attachment portion 22. That is, the front end portion 16A of the roof lining 16 is sandwiched between the flange portions 36B of the clip member 36 and the attachment portion 22, and is deformed by press, in the front-rear direction. The horizontal wall portion 34 formed at the rear end portion 30B of the sensor cover 30 is biased to the front side with respect to the attachment portion 22, through the clip member 36, by the elastic restoring force of the front end portion 16A of the roof lining 16.

Accordingly, even when a force in the downward direction is given to the rear end portion 30B side of the sensor cover 30 by the action of gravitational force while the front end portion 30A side of the sensor cover 30 serves as a rotation fulcrum, as laterally viewed in the vehicle-width direction, the movement in the downward direction is effectively restrained, compared to a case where an elastic member such as the front end portion 16A of the roof lining 16 is not interposed between the flange portions 36B of the clip member 36 and the attachment portion 22. Thereby, it is possible to reduce a design gap that is generated between the sensor cover 30 and the console cover 42 of the overhead console 40 due to the drop of the rear end portion 30B side of the sensor cover 30, and it is possible to enhance the design property of the sensor cover 30 and the console cover 42.

Furthermore, the elastic member interposed between the flange portions 36B of the clip member 36 and the attachment portion 22 is the roof lining 16 composed of the resin material that is softer than the roof bracket 20. Accordingly, the horizontal wall portion 34 formed at the rear end portion 30B of the sensor cover 30 is more effectively biased to the front side with respect to the attachment portion 22, through the clip member 36, compared to a case where the elastic member is composed of a resin material that is harder than the roof bracket 20. Moreover, the number of components is decreased and the production cost is reduced, compared to a case where the elastic member is provided separately from the roof lining 16.

The extension portions 46 that overlap with the lower surface of the rear end portion 30B of the sensor cover 30 are formed at least on both right and left sides of the front end portion of the console cover 42 of the overhead console 40. Accordingly, by the extension portions 46, it is possible to hide the design gap that is generated between the sensor cover 30 and the console cover 42 of the overhead console 40. That is, it is possible to make it difficult for an occupant to recognize the design gap that is generated between the sensor cover 30 and the console cover 42 of the overhead console 40.

The front end portion 30A of the sensor cover 30 is attached to the front windshield glass 14 through the cover bracket 26, and the cover bracket 26 is configured to allow the movement of the sensor cover 30 in the front-rear direction and the vehicle-width direction. Accordingly, when the sensor cover 30 is assembled, it is possible to absorb the dimension tolerance of the sensor cover 30 with respect to the cover bracket 26.

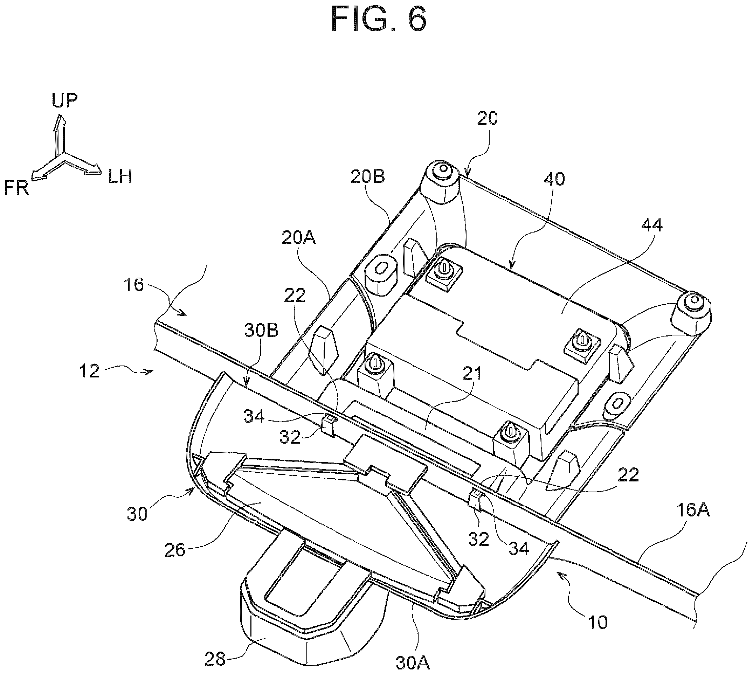

As shown in FIG. 6, the roof bracket 20 may be divided into a front portion 20A including the attachment portion 22 to which the fitting portion 38 of the sensor cover 30 is attached and a rear portion 20B including a support piece 24. In this case, the dimension tolerance between the rear end portion 30B of the sensor cover 30 and the attachment portion 22 of the roof bracket 20 is easily absorbed. Further, in this case, for example, it is possible to cope with the change in the front-rear-directional dimension of the case portion 44 of the overhead console 40.

The attachment structure 10 for the sensor cover 30 according to the embodiment has been described above with reference to the drawings. The attachment structure 10 for the sensor cover 30 according to the embodiment is not limited to the illustrated attachment structure, and the design can be appropriately changed without departing from the spirit of the present disclosure. For example, the display device is not limited to the electronic inner mirror 50, and may be an ordinary optical mirror.

The lower-side flange portion 36B of the clip member 36 may extend to a lower position than the illustrated position, the height of the front end portion 16A of the roof lining 16 may be such a height that the front end portion 16A abuts on the lower surface of the clip member 36, and the front end portion 16A of the roof lining 16 may be interposed between the lower-side flange portion 36B and the attachment portion 22. That is, it is allowable to adopt a configuration in which the through-hole 16B that communicates with the hole portion 22A is not formed on the front end portion 16A of the roof lining 16.

The front end portion 30A of the sensor cover 30 may be attached directly to the front windshield glass 14, without the cover bracket 26. The cover member is not limited to the sensor cover 30 that is provided on the front windshield glass 14 side, and may be a sensor cover that is provided on a rear windshield glass (not illustrated) side, for example. The housed object is not limited to the sensor unit, and may be, for example, an ETC, a driving recorder, or the like.

## Claims

1. A cover member attachment structure (10) comprising:
a support member (20) that is fixed to a roof member (18) of a vehicle (12);
a console member (40) that is fixed to the roof member (18); and
a cover member (30) that is disposed so as to be adjacent to the console member (40) in a vehicle front-rear direction, such that a first end portion (30A) of the cover member (30) in the vehicle front-rear direction is supported by a glass member (14) that separates an interior and exterior of the vehicle and a second end portion (30B) of the cover member (30) in the vehicle front-rear direction is attached to the support member (20), the cover member (30) being configured to house a housed object between the cover member (30) and the glass member (14), wherein
an elastic member (16) is interposed between the second end portion (30B) of the cover member (30) and the support member (20).

2. The cover member attachment structure (10) according to claim 1, wherein the second end portion (30B) of the cover member (30) includes a fitting portion (38) that is fitted in a hole portion (22A) that is provided on the support member (20).

3. The cover member attachment structure (10) according to claim 2, wherein:
the fitting portion (38) is provided with a flange portion (36B) that faces the support member (20); and
the elastic member (16) is interposed between the flange portion (36B) and the support member (20).

4. The cover member attachment structure (10) according to any one of claims 1 to 3, wherein the elastic member (16) is composed of a resin material that is softer than the support member (20).

5. The cover member attachment structure (10) according to any one of claims 1 to 3, wherein the elastic member (16) is a roof lining that constitutes a roof of a vehicle cabin.

6. The cover member attachment structure (10) according to any one of claims 1 to 3, wherein an end portion of the console member (40) on a side of the cover member (30) is provided with an extension portion (46) that overlaps with an end portion of the cover member (30).

7. The cover member attachment structure (10) according to any one of claims 1 to 3, wherein:
the first end portion (30A) of the cover member (30) is supported by the glass member (14) through a cover support portion (26); and
the cover support portion (26) is configured to allow movement of the cover member (30) in the vehicle front-rear direction and a vehicle-width direction.
